# EUROPÄISCHE PATENTSCHRIFT

(11) **EP 2 488 268 B1**
(45) Veröffentlichungstag und Bekanntmachung des Hinweises auf die Patenterteilung: **26.08.2015**
(21) Anmeldenummer: 10808984.8
(22) Anmeldetag: 12.10.2010
(51) Int. Cl.: B01D 15/22, B01D 15/42, G21G 1/00, G21F 9/12

(54) **VERFAHREN UND VORRICHTUNG ZUR GEWINNUNG EINES RADIONUKLIDS**
METHOD AND DEVICE FOR PRODUCING A RADIONUCLIDE
PROCÉDÉ ET DISPOSITIF POUR OBTENIR UN RADIONUCLÉIDE

(30) Priorität: 12.10.2009 DE 102009049108
(43) Veröffentlichungstag der Anmeldung: 22.08.2012
(73) Patentinhaber: Johannes-Gutenberg-Universität Mainz, 55122 Mainz (DE)
(72) Erfinder: RÖSCH, Frank, 55270 Zornheim (DE); FILOSOFOV, Dimitry, Moskau 19198 (RU)
(74) Vertreter: Plate, Jürgen
(86) Internationale Anmeldenummer: PCT/EP2010/006209
(87) Internationale Veröffentlichungsnummer: WO 2011/045019

(56) Entgegenhaltungen:
- EP-A1- 1 452 864
- US-A- 3 774 036
- US-A- 5 047 073
- US-A- 5 580 541
- US-A- 6 153 154
- US-A1- 2006 211 135
- US-A1- 2008 258 076

## Beschreibung

Die vorliegende Erfindung betrifft ein Verfahren zur Gewinnung eines Radionuklids, bei dem eine das Radionuklid enthaltende Absorptionssäule mit einem Elutionsmittel eluiert wird, sowie eine Vorrichtung zur Durchführung des Verfahrens.

Verfahren und Vorrichtungen zur Gewinnung von ausgewählten Radionukliden für radiopharmakologische Anwendungen sind im Stand der Technik bekannt (DE 10 2004 057 225 B4 oder US 2008/0258076 A1). Hierin wird zunächst ein radioaktives Mutternuklid bereitgestellt, das in einem als Radionuklid-Generator bezeichneten Behälter vorgehalten wird. Üblicherweise wird ein Mutternuklid mit einer Halbwertszeit von einigen Tagen bis zu einigen Tausend Jahren verwendet. Ein bei dem radioaktiven Zerfall des Mutternuklids gebildetes, ebenfalls radioaktives Tochternuklid - mit einem sehr langlebigen oder stabilen Zerfallsprodukt - hat demgegenüber eine relativ kurze Halbwertszeit von einigen Minuten oder Stunden bis zu wenigen Tagen. Aufgrund seiner kurzen Halbwertszeit eignet sich das Tochternuklid für radiopharmazeutische Anwendungen, weil das in den Körper eines Patienten eingebrachte Tochternuklid lediglich während eines kurzen Zeitraums radioaktive Strahlung emittiert und somit die Strahlungsdosis entsprechend gering ist.

Um die Strahlenbelastung bei der Applikation eines radioaktiven Tochternuklids zu minimieren, muss das langlebige Mutternuklid möglichst weitgehend von dem Tochternuklid separiert werden.

Die erfindungsgemäße Vorrichtung ermöglicht eine effektive radiochemische Separation des Mutternuklids, so dass ein Tochternuklid mit hoher radionuklidischer und radiochemischer Reinheit erhalten wird. Da das Tochternuklid im Allgemeinen in ein sehr langlebiges oder stabiles Endprodukt zerfällt, sind die vorstehend beschriebenen Systeme, bei denen das Tochternuklid eine kürzere Halbwertszeit als das Mutternuklid aufweist, für medizinische Anwendungen hervorragend geeignet. Die medizinischen Anwendungen derartiger Tochternuklide liegen im Gebiet der radiopharmazeutischen Chemie, der molekularen Bildgebung bzw. der nuklearmedizinischen Diagnostik und Endoradiotherapie. Hierbei eröffnet die seltene Kombination von radioaktiven Mutter- mit kurzlebigen Tochternukliden erhebliche chemische, logistische und wirtschaftliche Vorteile.

Die vorstehend beschriebenen Mutter- und Tochternuklide sind im labortechnischen Umfeld handhab- und verfügbar. Für die Anwendungen der Tochternuklide als solche oder für die Synthese von radioaktiv markierten Tracer-Verbindungen ist es nicht erforderlich, eine aufwendige "in-house-Produktion" wie im Fall der kurzlebigen Positron-Emitter ¹¹C, ¹⁸F usw. zu unterhalten oder kostspielige kommerzielle Vorprodukte wie im Fall typischer SPECT-Nuklide, beispielsweise ¹²³I, ¹¹¹In oder andere bedeutende Therapie-Nuklide einzusetzen. Wie für das Generatorsystem ⁹⁹Mo/^{99m}Tc bestens bekannt, erleichtern eine längere Halbwertszeit des Mutternuklids und die einfache Handhabung der Mutter-Tochternuklid-Systeme die Radiopharmakon-Synthese und Nutzung für die medizinische Patientenversorgung ganz entscheidend.

Auch wenn in einigen Fällen die Herstellung oder Gewinnung des Mutternuklids mittels Teilchenbeschleuniger, Reaktor oder aus natürlichen Vorkommen oder Zerfallsketten sehr aufwändig ist, so wiegen die ökonomischen und medizinischen Vorzüge der Mutter-Tochternuklid-Systeme diese Nachteile bei Weitem auf. Mittels einer Vorrichtung für die Separation von Mutter-Tochternuklid-Systemen können verschiedene klinische Anwendungen realisiert werden. Aufgrund der breiten Anwendbarkeit reduzieren sich die pro Patientencharge anfallenden Kosten in erheblichem Maße.

Für die praktische Nutzung von Mutter-Tochternuklid-Systemen in der Radiopharmazie bzw. für die Synthese von radioaktiv markierten Tracer-Verbindungen für verschiedenste medizinisch relevante Fragestellung ist eine Reihe von Faktoren zu berücksichtigen. Eine der Kernfragen ist das chemische und technische Konzept der Mutter-Tochternuklid-Systeme selbst. Dies betrifft die Entwicklung einer optimalen Separationsstrategie (in der Regel Ionentausch oder Festphasenextraktion) mit hohen Ausbeuten für das Tochternuklid bei minimalem Durchbruch des Mutternuklids; die Auswahl chemisch und radiopharmazeutisch geeigneter Solventien; die Vermeidung von Radiolyse-Effekten; die Separationsdauer; die finale chemische Form und das Volumen der Tochternuklid-Fraktion usw.

Mutter-Tochternuklid-Systeme sind vor allem in der nuklearmedizinischen Diagnostik mittels SPECT beispielsweise unter Verwendung des ⁹⁹Mo/^{9m}Tc-Systems etabliert. Für die Endoradiotherapie sind Mutter-Tochternuklid-Systeme wie ⁹⁰Sr/⁹⁰Y und ¹⁸⁸W/¹⁸⁸Re unverzichtbar geworden. In den letzten Jahren werden in klinischen PET- und PET/CT-Verfahren außerdem positronemittierende Mutter-Tochternuklid-Systeme wie ⁸²Sr/⁸²Rb und ⁶⁸Ge/⁶⁸Ga in zunehmendem Umfang eingesetzt. Künftig dürfte auch das Mutter-Tochternuklid-System ⁴⁴Ti/⁴⁴Sc eine wachsende Bedeutung erlangen.

Ein Mutter-Tochternuklid-System muss verschiedenen chemisch und medizinisch bedingten Vorgaben sowie rechtlichen Auflagen genügen. Insbesondere gilt es, die therapeutische bzw. diagnostische Strahlenbelastung möglichst niedrig zu halten, indem der Gehalt des Mutternuklids - der sogenannte "Break-through" - in dem gereinigten Tochternuklid minimiert wird. Der erlaubte Gehalt an Mutternuklid ist arzneimittelrechtlich geregelt und darf bei der medizinischen Nutzung nicht überschritten werden.

Der Gehalt an Mutternuklid ist wesentlich durch das chemische Konzept des Separation bestimmt. Die bekannten chemischen Trennverfahren beruhen auf Flüssig-flüssig-Extraktion oder Säulenchromatographie. Im Fall der Säulenchromatographie wird das Tochternuklid teilweise oder vollständig auf einem festen Absorber deponiert und in einem nachfolgenden Schritt durch geeignete, in der Regel wässrige Elutionsmittel ausgewaschen bzw. eluiert. Als Absorber werden vorzugsweise anorganische Stoffe wie Oxide der Metalle Aluminium, Silizium, Zinn, Titan, Zirkon usw. oder organische anionische oder kationische Ionentauscher eingesetzt. Vor dem Eluieren des Tochternuklids werden gegebenenfalls Verunreinigungen mittels sekundärer Elutionsmittel entfernt, wobei die sekundären Elutionsmittel, den Gehalt des Tochternuklids in dem Absorber nicht oder nur in geringem Ausmaß reduzieren.

Bei vorgegebenem Säulenmaterial wird die Separationsleistung maßgeblich durch die Abmessung der Vorrichtung, insbesondere durch das Säulenvolumen und die Säulenlänge beeinflußt. In der Regel sollten das Säulenvolumen und die Säulenlänge so groß ausgelegt werden, dass einerseits das Mutternuklid vollständig absorbiert und andererseits das für die Elution des Tochternuklids erforderliche Volumen an Elutionsmittel möglichst gering ist. Hierbei ist zu beachten, dass aufgrund chromatographischer Wechselwirkungen zwischen dem Absorber und dem Mutternuklid zu einem gewissen Grad eine Co-Elution des Mutternuklides auftritt. Je nach Säulendimension, Anzahl der Elutionen bzw. Volumen des Elutionsmittels, Alterung des Systems, u.a. auch als Folge radiolytischer Prozesse, weitet bzw. wandert eine mit Mutternuklid angereicherte Zone des Absorbers in Richtung des Elutionsmittelstromes, wodurch sich der Break-through d.h. der Gehalt an Mutternuklid in dem Tochternuklid-Eluat erhöht.

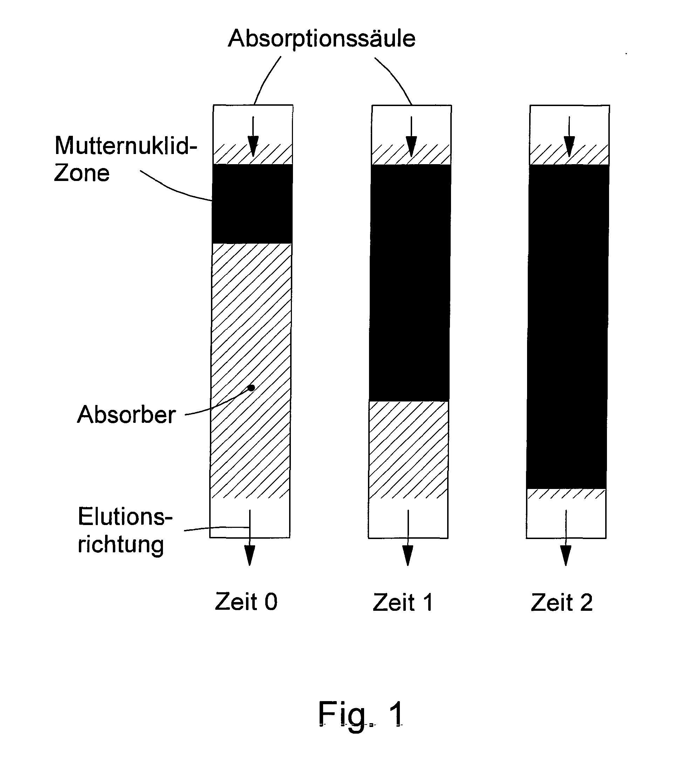

Break-through ist vor allem dann kritisch, wenn es sich um langlebige Mutternuklide handelt. So hat bei dem neuerdings für medizinische Anwendungen relevanten Mutter-Tochternuklid-System ⁸²Sr/⁸²Rb das Mutternuklid ⁸²Sr eine Halbwertszeit von über 20 Tagen (T_{1/2} = 25,6 d). Weitere Beispiele für Systeme mit langlebigen Mutternukliden sind: ¹⁸⁸W/¹⁸⁸Re mit T_{1/2}(¹⁸⁸W) = 69,4 d; ⁶⁸Ge/⁶⁸Ga mit T_{1/2}(⁶⁸Ge) = 271 d und ⁴⁴Ti/⁴⁴Sc mit T_{1/2}(⁴⁴Ti)≈60 y. Hier wird der wesentliche Unterschied zum bislang am häufigsten medizinisch verwendeten Mutter-Tochternuklid-System ⁹⁹Mo/⁹⁹Tc deutlich - die Halbwertszeit des Mutternuklids ⁹⁹Mo beträgt nur T_{1/2} = 66 h. In diesem Fall ist die mit wiederholter Elution und langen Nutzungsperioden einhergehende Zunahme des Break-through vernachlässigbar. Dagegen ist dies bei den erwähnten Systemen mit bedeutend längeren Halbwertszeiten der Mutternuklide ein gravierendes Problem (Abbildung 1).

Dementsprechend hat die vorliegende Erfindung die Aufgabe, ein Verfahren bereit zu stellen, bei dem der Break-through des auf einem Säulenmaterial absorbierten Mutternuklids auch bei hoher Elutionsfrequenz, d.h. bei intensiver Nutzung sehr gering ist.

Diese Aufgabe wird gelöst durch ein Verfahren zur Gewinnung eines Radionuklids, umfassend die Schritte:
(a) Bereitstellen einer das Radionuklid enthaltenden Absorptionssäule;
(b) Eluieren der Absorptionssäule mit einem Elutionsmittel, wobei das Elutionsmittel die Absorptionssäule in einer ersten Fließrichtung durchströmt; und
(c) Eluieren der Absorptionssäule mit dem Elutionsmittel in einer der ersten Fließrichtung entgegengesetzten zweiten Fließrichtung.

Das erfindungsgemäße Verfahren umfasst insbesondere zwei Ausführungsformen bei denen sukzessive Elutionen mit jeweils entgegengesetzter Fließrichtung des Elutionsmittels durchgeführt werden (Ausführungsform 1) oder nach einer initialen Elution eine anschließende "Spülung" der Absorptionssäule in einer zur initialen Elution entgegengesetzten Fließrichtung vorgenommen wird (Ausführungsform 2).

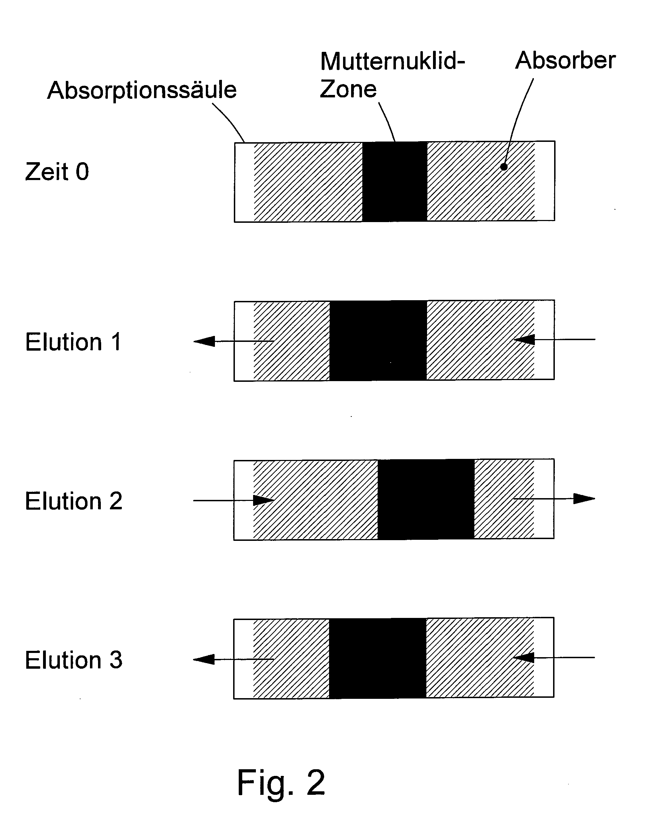

Bei den auf Gleichgewichten des Ionenaustausches (im Fall organischer Ionentauscher) beruhenden Absorptionen des Mutternuklids wird damit erreicht, dass der Anteil des in Fließrichtung migrierenden Mutternuklids wieder in Richtung seiner initialen Absorptionszone zurück verschoben wird (Fig. 2).

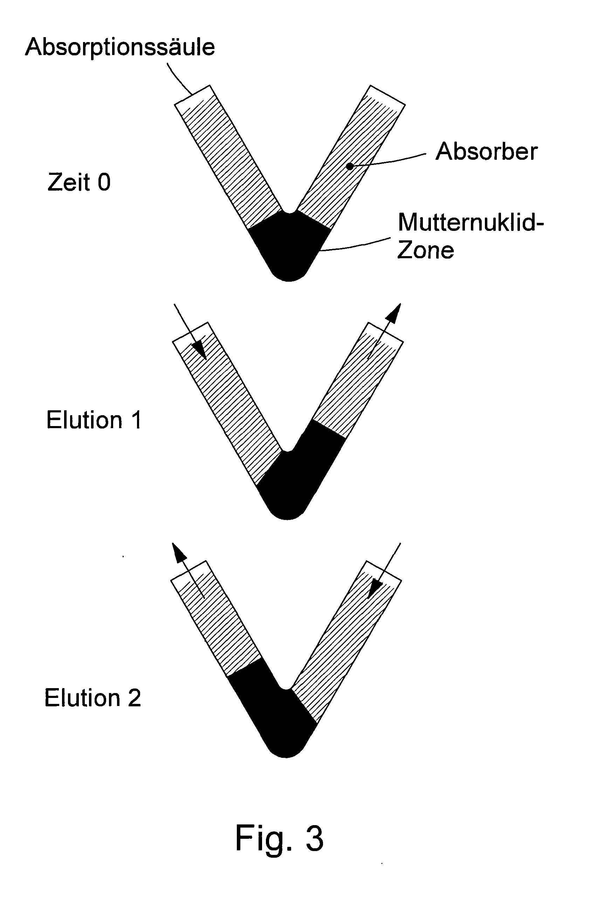

Im Fall anorganischer Ionentauscher beruht die Absorption des Mutternuklids auf einem Gleichgewicht der Cokristallisation und wird dadurch erreicht, dass der Anteil der in Fließrichtung migrierenden anorganischen Kristalle des Säulenmaterials, welche das Mutternuklid enthalten, wieder zurück in Richtung der initialen Absorptionszone verschoben wird (Fig. 3).

In Fig. 1 ist das übliche (uni-direktionale) Elutions-Verfahren nach dem Stand der Technik dargestellt. Hierbei ist die Ausdehnung der Mutternuklid-haltigen Zone zu Beginn der Nutzung (Zeitpunkt 0) und ihre allmähliche Ausweitung (Migration) in Richtung der Tochternuklid-Elution (Zeitpunkte 1 und 2) gezeigt. Bei einem kurzlebigen Mutternuklid, wie ⁹⁹Mo mit T_{1/2} = 66 h, ist zum Zeitpunkt 1 die Nutzung abgeschlossen (vollständiger Zerfall des Mutternuklids), so dass ein Break-through des Mutternuklids unterbleibt. Bei langlebigen Mutternukliden mit einer Halbwertszeit von mehr als einigen Tagen und längerer Nutzungsdauer erfolgt jedoch der zum Zeitpunkt 2 dargestellte Break-through, wobei Mutternuklid in verstärktem Maße in das Eluat des Tochternuklids gelangt.

Fig. 2 zeigt das erfindungsgemäße Elutions-Prinzip ("Pendel-Elution") für eine vertikal angeordnete Absorptionssäule. Hierbei ist die Ausdehnung der Mutternuklid-haltigen Zone zu Beginn der Nutzung (Zeitpunkt 0) und ihre Ausweitung und Komprimierung (Elutionen 1, 2 und 3) gezeigt.

In Fig. 3 ist eine Weiterbildung des erfindungsgemäßen Verfahrens mit einer V-förmigen Absorptionssäule dargestellt. Hierbei ist die Ausdehnung der Mutternuklid-haltigen Zone zu Beginn der Nutzung (Zeitpunkt 0) und ihre Ausweitung und Komprimierung (Elutionen 1 und 2) gezeigt.

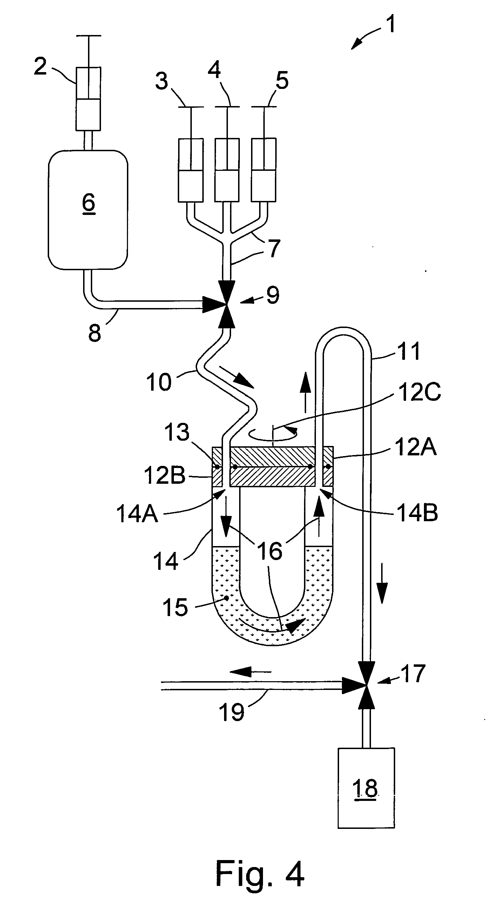

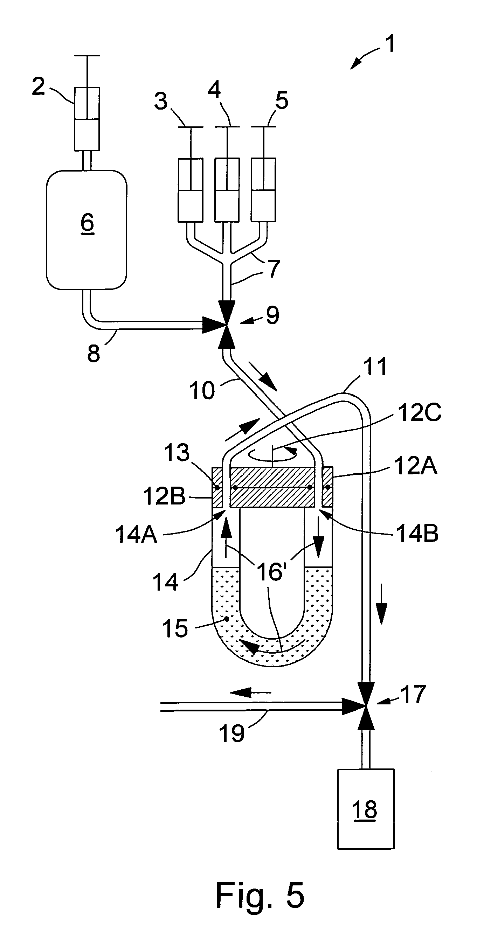

Die Fig. 4 und 5 zeigen beispielhaft die Funktionsweise einer erfindungsgemäßen Vorrichtung 1 zur Gewinnung eines Radio- bzw. Tochternuklids. Hierin wird einer Absorptionssäule 14 mit einem Absorber 15 Mutternuklid aus einem Radionuklid-Generator oder einem Vorlagebehälter 6 zugeführt. Der Übertrag des Mutternuklids erfolgt vorzugsweise durch Flüssigextraktion unter Verwendung eines initialen Elutionsmittels, das dem Radionuklid-Generator oder Vorlagebehälter 6 über eine erste Pumpe 2 zugeführt wird. Über Leitungen 8, 10 und ein Mehrwegventil 9 gelangt das Mutternuklid in die Absorptionssäule 14 und wird je nach Beschaffenheit und chemischer Zusammensetzung des Absorbers 15 zu einem geringen Teil (Ausführungsform 2) oder nahezu vollständig (Ausführungsform 1) deponiert. Nachdem eine vorbestimmte Menge bzw. ein vorbestimmtes Volumen an initialem Elutionsmittel und darin enthaltenem Mutternuklid von dem Radionuklid-Generator oder Vorlagebehälter 6 in die Absorptionssäule 14 überführt worden ist, erfolgt die Elution von Tochternuklid. Optional wird der Absorber 15 vor der Tochternuklid-Elution gereinigt, indem ein oder mehrere sekundäre Elutionsmittel mithilfe von Pumpen (3, 4, 5) über Leitungen 7 und das Mehrwegventil 9 durch die Absorptionssäule 14 gepumpt werden. Die sekundären Elutionsmittel lösen gezielt bestimmte chemische Verunreinigungen aus dem Absorber, ohne hierbei den Gehalt an Tochternuklid im Absorber 15 in nennenswertem Umfang zu mindern. Zum Fördern des Elutionsmittel für das Tochternuklid ist vorzugsweise eine der Pumpen (3, 4, 5) vorgesehen. Im Fall kurzlebiger Mutternuklide kann das Elutionsmittel für das Tochternuklid gegebenenfalls auch mittels der Pumpe 2 zugeführt werden, wobei der Absorber 15 ein hohes Rückhaltevermögen für das Mutternuklid aufweisen muss.

Die Absorptionssäule 14 weist eine erste und zweite Öffnung (14A, 14B) auf, durch welche die verschiedenen Elutionsmittel zu- oder abgeführt werden. Im Weiteren ist die Absorptionssäule 14 mit einer stellbaren Fluidkupplung (12A, 12B) verbunden, die es ermöglicht, die Fließrichtung (16, 16') der Elutionsmittel durch die Absorbersäule 14 umzukehren. Bei der in Fig. 4 gezeigten Stellung der Fluidkupplung (12A, 12B) fließt Elutionsmittel von der ersten Öffnung 14A zur zweiten Öffnung 14B, wie durch die Richtungspfeile 16 angedeutet. Bei der in Fig. 5 dargestellten Konfiguration fließt Elutionsmittel in entgegengesetzter, durch die Pfeile 16' angezeigter Richtung von der zweiten Öffnung 14B zur ersten Öffnung 14A.

Die Umkehrung der Fließrichtung (16, 16') wird beispielsweise dadurch realisiert, dass die Fluidkupplung eine erste und zweite Kanalplatte (12A, 12B) umfasst, wobei mindestens eine der Kanalplatten 12A oder 12B um eine Achse 12C drehbar gelagert ist und jede der Kanalplatten zwei Durchführungen aufweist. Die Durchführungen der Kanalplatten (12A, 12B) sind derart angeordnet, dass jede der beiden Durchführungen der Kanalplatte 12A zugleich mit jeder der beiden Durchführungen der Kanalplatte 12B durch Drehung um die Achse 12C derart zur Deckung gebracht werden kann, dass zwei Kanäle zum Durchleiten eines Fluids durch die Fluidkupplung (12A, 12B) zur Verfügung stehen.

Die beiden Durchlässe der ersten Kanalplatte 12A sind mit Leitungen 10 und 11 verbunden, wobei die Leitung 10 die Absorptionssäule 14 mit dem Radionuklid-Generator oder Vorlagebehälter 6 verbindet (gegebenenfalls über das Mehrwegventil 9). Über die Leitung 11 wird ein durch die Absorptionssäule 14 hindurchgeführtes Elutionsmittel in ein Auffangefäß 18 oder über das Mehrwegventil 17 und die Leitung 19 zu einer Entnahme- oder Synthesestation für das mit dem Tochternuklid angereicherte Eluat weitergeleitet.

Gemäß der Darstellung der Fig. 4 und 5 ist die erste bzw. obere Kanalplatte 12A drehbar gelagert. Dementsprechend sind die mit der Kanalplatte 12A verbundenen Leitungen 10 und 11 als flexible Schläuche ausgebildet, so dass sie einer Drehung der Kanalplatte 12A folgen können. In einer alternativen, in den Fig. 4 und 5 nicht gezeigten Weiterbildung der erfindungsgemäßen Vorichtung sind die zweite Kanalplatte 12B und die mit ihr fest verbundene Absorptionsäule 14 drehbar gelagert, während die erste, mit den Leitungen 10 und 11 verbundene Kanalplatte 12A fixiert ist.

In einer anderen zweckmäßigen Ausgestaltung der erfindungsgemäßen Vorrichtung ist ein kommerziell erhältliches Mehrwegventil mit zwei direkten und zwei gekreuzten Kanälen für die Umkehrung der Fließrichtung (16, 16') des Elutionsmittels in der Absorptionssäule 14 vorgesehen. Die Verwendung eines derartigen Mehrwegventils ermöglicht es, eine Vorrichtung in der Weise zu konfigurieren, dass weder die Leitungen 10 und 11 noch die Absorptionssäule 14 beweglich sind.

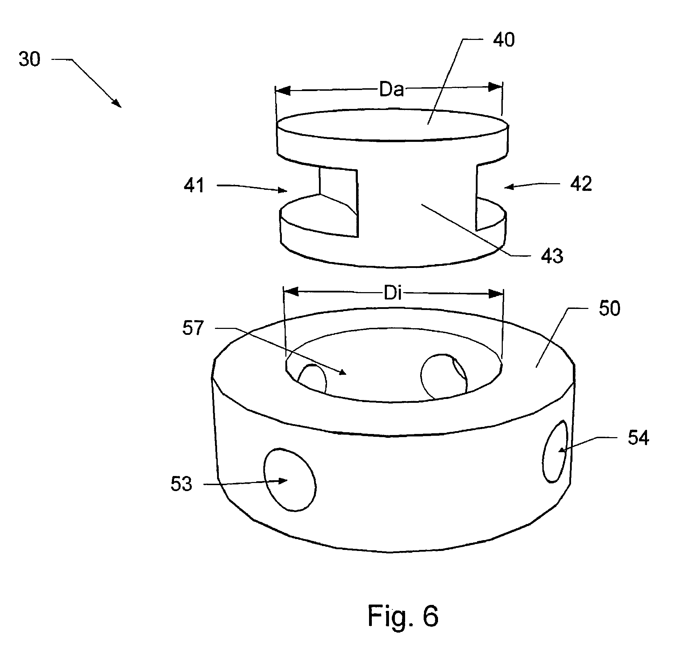

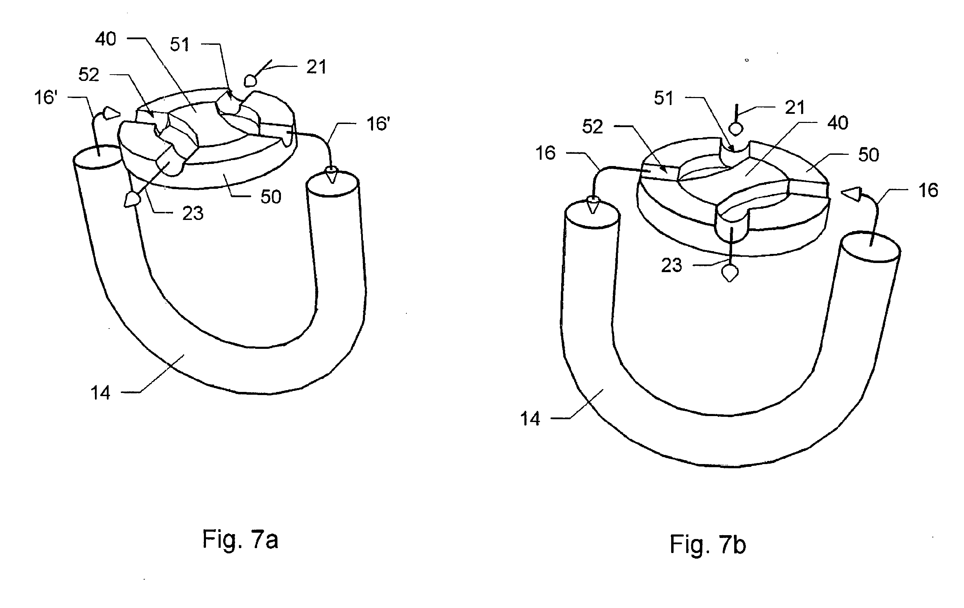

Ein weiteres erfindungsgemäßes Kreuzventils 30 ist in den Figuren 6, 7a und 7b gezeigt. Gemäß der Explosionsdarstellung der Fig. 6 umfasst das Kreuzventil 30 einen inneren und einen äußeren Ventilkörper 40 bzw. 50. Der innere Ventilkörper 40 ist im Wesentlichen zylinder-, konus- oder kegelstumpfförmig gestaltet. Das Bezugszeichen Da bezeichnet den Aussendurchmesser des Ventilkörpers 40. Die Mantelfläche des zylindrischen, konus- oder kegelstumpfförmigen Ventilkörpers 40 weist zwei Ausnehmungen bzw. Kanäle 41 und 42 auf, die durch einen Steg 43 fluiddicht voneinander getrennt sind. Die Kanäle 41 und 42 verlaufen im Wesentlichen parallel zueinander.

Im Betriebszustand ist der Ventilkörper 40 drehbar in einer zylindrischen bzw. konischen Bohrung 57 des äußeren Ventilkörper 50 angeordnet. In der zylinderförmigen Ausführungsform des Kreuzventils 30 hat die Bohrung 57 bzw. der Ventilkörper 50 einen Innendurchmesser Di, der nur geringfügig größer ist als der Außendurchmesser Da des inneren Ventilkörpers 40. Typischerweise beträgt die Differenz zwischen Di und Da, d.h. (Di - Da) 0,5 bis 10 µm, vorzugsweise 0,5 bis 4 µm. Dementsprechend ist die Passung zwischen dem inneren und äußeren Ventilkörper 40 und 50 fluiddicht.

Der äussere Ventilkörper 50 weist vier Durchführungen (51, 52, 53, 54) für die Zuführung und Ableitung von Eluat auf. Die vier Durchführungen (51, 52, 53, 54) sind in mathematisch gebräuchlicher Weise nummeriert, d.h. bei einer Umrundung des äusseren Ventilkörpers 50 entgegen dem Uhrzeigersinn aufsteigend. Vorzugsweise sind die Durchführungen (51, 52, 53, 54) als zylindrische Bohrungen ausgestaltet, deren Längsachsen senkrecht und radial zur Symmetrieachse der Bohrung 57 ausgerichtet sind. Hierbei bezeichnet der Begriff "radial" eine Anordnung, bei der die Längsachsen der Durchführungen (51, 52, 53, 54) koplanar in einer zur Symmetrieachse der Bohrung 57 angeordneten Ebene liegen und sich in dem Durchtrittspunkt der Symmetrieachse der Bohrung 57 durch diese Ebene schneiden. Hierbei sind die Längsachsen der Durchführungen (51, 52, 53, 54) vorzugsweise kreuzartig, d.h. entlang zweier um 180 Grad gegeneinander gedrehter Hauptachsen ausgerichtet. Die vorstehend beschriebene "kreuzartige" bzw. "radiale" Anordnung der Durchführungen (51, 52, 53, 54) ist zweckmäßig und fertigungstechnisch vorteilhaft. Nichtdestoweniger sind erfindungsgemäß auch hiervon abweichende Anordnungen vorgesehen, bei denen die Längsachsen der Durchführungen (51,52,53,54) in einem Winkel von 0 bis 90 Grad gegenüber der radialen Richtung gedreht sind, ähnlich den Schaufeln einer Turbine. Die erfindungsgemäß für die Funktion des Kreuzventiles 30 wesentlichen Merkmale (i) und (ii) sind nachfolgend kurz aufgeführt:
(i) die Durchführungen (51,52,53,54) sowie ihre Mündungen auf der Innen- und Aussenseite des Ventilkörpers 50 sind voneinander fluiddicht getrennt bzw. voneinander räumlich beabstandet; und
(ii) jeweils zwei zueinander benachbarte Durchführungen (51, 54) oder (51, 52) und (52, 53) bzw. (53, 54) des äußeren Ventilkörpers 50 sind über die Kanäle 41 oder 42 des inneren Ventilkörpers 40 gleichzeitig miteinander verbindbar, wobei die Verbindung 51 zu 54 oder 51 zu 52 jeweils durch den Steg 43 fluiddicht von der Verbindung 52 zu 53 bzw. 53 zu 54 fluiddicht getrennt ist.

Das vorstehende Merkmal (ii) ist in anschaulicher Weise in den Fig. 7a und 7b sowie in der nachfolgenden Tabelle 1 dargestellt. Die Fig. 7a und 7b zeigen zwei perspektivische Schnittansichten eines entlang einer transversalen Mittenebene aufgeschnittenen Kreuzventils 30, wobei der innere Ventilkörper 40 in zwei um jeweils 90 Grad zueinander gedrehten Positionen angeordnet ist. Bei der in Fig. 7a gezeigten Anordnung sind die Durchführungen 51 und 54 miteinander verbunden sowie 52 und 53. Fig. 7b hingegen zeigt eine Stellung bei der die Durchführungen 51 und 52 sowie 53 und 54 miteinander verbunden sind.

| | 1. Durchführung | | Kanal | | 2. Durchführung |
|---|---|---|---|---|---|
| Fig. 7a | 51 | → | 42 | → | 54 |
| | 52 | → | 41 | → | 53 |
| Fig. 7b | 51 | → | 41 | → | 52 |
| | 53 | → | 42 | → | 54 |

Die Bezugszeichen 14, 16 und 16' der Fig. 7a und 7b haben die gleiche Bedeutung wie in Fig. 4 und 5. Dementsprechend ist die Absorptionssäule mit der Ziffer 14 bezeichnet, während die Richtungspfeile 16 und 16' die Fließrichtung des Eluats durch die Absorptionssäule 14 angeben. Die mit den Ziffern 21 und 23 gekenzeichneten Richtungspfeile geben den Vorlauf und Ablauf des Eluats durch die Leitungen 10 bzw. 11 (siehe Fig. 4 und 5) an, welche an die Durchführungen 51 bzw. 53 angeschlossen sind. Um Fig. 7a und 7b übersichtlich zu halten, sind die Leitungen 10 und 11 nicht dargestellt. In analoger Weise sind die beiden Öffnungen der Absorptionssäule 14 über Leitungen (ebenfalls in Fig. 7a und 7b nicht gezeigt) mit den Durchführungen 52 und 54 verbunden.

Aus Fig. 7a und 7b ist ersichtlich, dass die Fließrichtung des Eluats im Vorlauf 21 und im Ablauf 23 (d.h. in den Leitungen 10 und 11) unabhängig von der Stellung des inneren Ventilkörpers 40 konstant ist. Demgegenüber wird bei einer Drehung des inneren Ventilkörpers um 90 Grad die Fließrichtung des Eluats durch die Absorptionssäule 14 von 16' nach 16 umgekehrt. Somit erfüllt das Kreuzventil 30 die gleiche Funktion wie die Fluidkuppklung 12A/12B der Fig. 4 und 5.

Der innere und äußere Ventilkörper 40 und 50 sind zweckmäßig aus einem metallischen oder polymeren Werkstoff, wie Edelstahl oder Teflon gefertigt.

Wie bereits erwähnt, sind erfindungsgemäß zudem Ausführungsformen vorgesehen, bei denen der innere Ventilkörper 40 und die Bohrung 57 eine konische Kontur oder die Form eines Kegelstumpfes aufweisen.

Zweckmäßig ist der innere Ventilkörper mittels einer Welle mit einem elektrisch angetriebenen Stellglied (in Fig. 7a und 7b nicht gezeigt), insbesondere mit einem Schrittmotor gekoppelt. Vorteilhafterweise werden der Schrittmotor sowie andere Komponenten der erfindungsgemäßen Vorrichtung, wie die Fördereinrichtungen bzw. Pumpen 2 bis 5 (siehe Fig. 4 und 5) über eine elektronische Steuerung, insbesondere eine Speicher-programmierbare Steuerung (SPS) vollautomatisch kontrolliert. Hierbei kann gemäß einem in der SPS abgelegten Steuerprogramm der innere Ventilkörper 40 in regelmäßigen Zeitabständen zwischen den oben beschriebenen, um 90 Grad gegeneinander versetzten Stellungen gedreht und die Fließrichtung des Eluats zwischen 16' und 16 umgekehrt werden.

### Beispiel zur Ausführungsform 1

Gemäß dem Stand der Technik wird das Mutternuklid ⁶⁸Ge als vierwertiges Kation auf einem Absorber aus modifiziertem TiO₂ in der Weise deponiert, dass das ⁶⁸Ge auf dem oberen Viertel der Säule verbleibt (vgl. Abbildung 1 zum Zeitpunkt 0). Die Elution des ⁶⁸Ga erfolgt mit 0,1 N HCl (=0,1 mol/l HCl). Das Elutionsvolumen für eine möglichst quantitative Elution des ⁶⁸Ga liegt zwischen 3 und 10 ml. Weitere Elutionen können in rascher Folge vorgenommen werden, weil das Tochternuklid ⁶⁸Ga schnell generiert wird. Nach 1, 2, 3 oder 4 Halbwertszeiten des Tochternuklids ⁶⁸Ga, d.h. nach ca. 68 Minuten, 2,3 Stunden, 3,4 Stunden bzw. 4,5 Stunden sind ca. 50%, 75%, 87,5% bzw. 93,7% der insgesamt verfügbaren ⁶⁸Ga-Aktivität umgesetzt. Der Gehalt an ⁶⁸Ge in den Tochternuklid-Elutionen, die auf die mit 0,1 N HCl vorgenommene initiale Elution folgen, liegt jeweils bei ca. 1·10⁻³ %. Nach 100 Elutionen nimmt der Gehalt an ⁶⁸Ge in der Regel zu und erreicht Werte von ca. 1·10⁻² %.

Demgegenüber wird gemäß der vorliegenden Erfindung unmittelbar nach einer Tochternuklid- bzw. ⁶⁸Ga-Elution ein Volumen von 3 bis 10 ml 0,1 N HCl durch die Absorptionssäule geleitet in einer zur initialen Elution sowie zur ⁶⁸Ga-Elution entgegengesetzen Fließrichtung. Das derart durch die Absorptionssäule geleitete Volumen enthält kaum ⁶⁸Ga-Aktivität und wird verworfen. Dementsprechend wird dieser Vorgang auch als "Spülung" bezeichnet. Nach der Spülung steht die Absorptionssäule für die nächste ⁶⁸Ga-Elution bereit. Aufgrund der Spülung ist jedoch die Zone der ⁶⁸Ge-Verteilung wieder zurück in Richtung der initialen Absorbtionszone verschoben worden. Der ⁶⁸Ge-Gehalt in der nachfolgenden ⁶⁸Ga-Elution wird dadurch wesentlich geringer. Im Fall von 100 Elutionen nach dem vorstehenden erfindungsgemäßen Verfahren liegt der Break-through von ⁶⁸Ge bei nur ca. 2·10⁻³ % anstatt der sonst zu erwartenden ca. 1·10⁻² %.

### Beispiel zur Ausführungsform 2

Gemäß dem Stand der Technik wird das Muttemuklid ⁶⁸Ge als vierwertiges Kation auf einen Absorber aus modifiziertem TiO₂ in der Weise aufgebracht, dass das ⁶⁸Ge in der Mitte der Säule verbleibt (vgl. Fig. 1) zum Zeitpunkt 0. Die Elution des ⁶⁸Ga erfolgt mit 0,1 N HCl. Das Elutionsvolumen für eine möglichst quantitative Elution des ⁶⁸Ga liegt zwischen 3 und 10 ml. Weitere Elutionen können in rascher Folge vorgenommen werden, weil das Tochternuklid ⁶⁸Ga schnell generiert wird. Nach 1, 2, 3 oder 4 Halbwertszeiten des Tochternuklids ⁶⁸Ga, d.h. nach ca. 68 Minuten, 2,3 Stunden, 3,4 Stunden bzw. 4,5 Stunden liegen ca. 50%, 75%, 87,5% bzw. 93,7% der insgesamt verfügbaren ⁶⁸Ga-Aktivität vor. Der Gehalt an ⁶⁸Ge in den Elutionen, die den ersten Elutionen des mit 0,1 N HCl durchgeführt werden, liegt jeweils bei ca. 2·10⁻³ %. Nach 100 Elutionen nimmt dieser Gehalt in der Regel zu und erreicht Werte von ca. 1·10⁻²%.

Demgegenüber werden gemäß der vorliegenden Erfindung aufeinander folgende Tochternuklid- bzw. ⁶⁸Ga-Elutionen in jeweils entgegengesetzer Fließrichtung (vgl. Fig. 3) vorgenommen. Hierbei enthält jeder der Tochternuklid-Elutionen eine für die medizinische Nutzung adäquate ⁶⁸Ga-Aktivität. Die Absorptionssäule steht ohne Zwischenschaltung von Spülschritten für nachfolgende Tochternuklid-Elutionen bereit. Die ⁶⁸Ge-haltige Zone wird durch die Elutionen mit wechselweise entgegengesetzter Fließrichtung in Richtung ihrer initialen Absorbtionszone verschoben bzw. komprimiert. Der ⁶⁸Ge-Gehalt sukzessiver ⁶⁸Ga-Elutionen wird dadurch wesentlich geringer. Im Fall von 100 Elutionen nach dem erfindungsgemäßen Verfahren liegt der Break-through von ⁶⁸Ge bei nur ca. 2·10⁻³ % anstatt der sonst zu erwartenden ca. 1·10⁻² %.

Mit der in Fig. 3 gezeigten vertikalen Ausrichtung ist neben der Regelung chromatographischer Vorgänge ein zusätzlicher Effekt verbunden, der in Betriebspausen ("Stand-by-Phasen") zwischen zwei aufeinander folgenden Elutionen zum Tragen kommt. Stand-by-Phasen treten auf bei der täglichen Nutzung mit üblichen Zyklustakten von beispielsweise 1 bis 4,5 Stunden sowie nachts oder am Wochenende zwischen der letzten und der ersten Elution zweier aufeinander folgender Arbeitstage. Die vertikale Ausrichtung des Systems nach Fig. 3 bewirkt, dass im Laufe einer Stand-by-Phase co-eluierte TiO₂-Partikel mit einem Gehalt an absorbiertem ⁶⁸Ga-Mutternuklid absinken und sich am Boden der Absorptionssäule ansammeln bzw. aufkonzentrieren. Verbunden mit dem "Einschluss" des ⁶⁸Ge-Mutternuklids in einer lokalisierten Raumzone vermindert sich der Break-through bei der nächsten Tochternuklid-Elution.

### Bezugszeichenliste

- 1: Vorrichtung zur Gewinnung eines Radionuklids
- 2-5: Pumpe (Förderkolben, Drehschieber- oder Schlauchradpumpe)
- 6: Radionuklid-Generator bzw. Vorlagebehälter mit Mutternuklid
- 7, 8: Leitungen
- 9: Mehrwegventil
- 10, 11: Leitungen (insbesondere flexible Schläuche)
- 12A/12B: Fluidkupplung (erste und zweite Kanalplatte)
- 13: Dichtung
- 14: Absorptionssäule
- 14A/14B: erste und zweite Öffnung
- 15: Absorber
- 16/16': Richtungspfeile, Fließ- bzw. Elutionsrichtung
- 17: erstes Mehrwegventil
- 18: Auffangbehälter
- 19: Leitung (zum Produkt- bzw. Synthesegefäß)
- 21: Richtungspfeil, Eluatvorlauf
- 23: Richtungspfeil, Eluatablauf
- 30: zweites Mehrwegventil
- 40: innerer Ventilkörper
- Da: Außendurchmesser, innerer Ventilkörper
- 41/42: Ausnehmungen bzw. Kanäle
- 50: äußerer Ventilkörper
- 51 - 54: Durchführungen
- 57: Bohrung
- Di: Innendurchmesser der Bohrung 57

## Patentansprüche

1. Verfahren zur Gewinnung eines Radionuklids, umfassend die Schritte:
(a) Bereitstellen einer das Radionuklid enthaltenden Absorptionssäule (14, 15);
(b) Eluieren der Absorptionssäule mit einem Elutionsmittel, wobei das Elutionsmittel die Absorptionssäule (14, 15) in einer ersten Fließrichtung (16) durchströmt; und
(c) Eluieren der Absorptionssäule (14, 15) mit dem Elutionsmittel in einer der ersten Fließrichtung (16) entgegengesetzten zweiten Fließrichtung (16').

2. Verfahren nach Anspruch 1, **dadurch gekennzeichnet, dass** die Schritte (b) und (c) ein- oder mehrfach wiederholt werden.

3. Verfahren nach Anspruch 1 oder 2, **dadurch gekennzeichnet, dass** in Schritt (a) ein Radionuklid-Generator (6) mit einem initialen Elutionsmittel eluiert und ein hierbei erhaltenes initiales Eluat durch die Absorptionssäule (14, 15) geleitet wird.

4. Verfahren nach einem oder mehreren der Ansprüche 1 bis 3, **dadurch gekennzeichnet, dass** die Absorptionssäule (14, 15) in Schritt (a) ein- oder mehrfach mit einem oder mehreren sekundären Elutionsmitteln eluiert wird, um Verunreinigungen zu entfernen.

5. Verfahren nach einem oder mehreren der Ansprüche 1 bis 4, **dadurch gekennzeichnet, dass** die in Schritt (a) bereitgestellte Absorptionssäule (14, 15) ein Isotopengemisch aus einem radioaktiven Mutternuklid und radioaktiven Tochternukliden enthält, welches gewählt ist aus der Gruppe umfassend ⁸²Sr/⁸²Rb mit Halbwertszeit T_{1/2}(⁸²Sr) = 25,6 d; ¹⁸⁸W/¹⁸⁸Re mit T_{1/2}(¹⁸⁸W) = 69,4 d; ⁶⁸Ge/⁶⁸Ga mit T_{1/2}(⁶⁸Ge) = 271 d; ⁴⁴Ti/⁴⁴Sc mit T_{1/2}(⁴⁴Ti)≈60 y; ²²⁵Ac/²¹³Bi mit T_{1/2}(²²⁵Ac) = 10,6 d; ⁹⁰Sr/⁹⁰Y mit T_{1/2}(⁹⁰Sr) = 28,5 y; ²²⁹Th/(²²⁵Ra)²²⁵Ac mit T_{1/2}(²²⁹Th) = 7340 y; und ²²⁷Ac/(²²³Th)²²³Ra mit T_{1/2}(²²⁷Ac) = 21,77 y.

6. Verfahren nach einem oder mehreren der Ansprüche 1 bis 5, **dadurch gekennzeichnet, dass** eine Absorptionssäule verwendet wird, die einen Absorber aus einem anorganischen Stoff, insbesondere aus einem Oxid der Metalle Aluminium, Silizium, Zinn, Titan, Zirkon oder aus einem organischen Stoff, insbesondere aus einem anionischen oder kationischen Ionentauscher enthält.

7. Verfahren nach einem oder mehreren der Ansprüche 1 bis 6, **dadurch gekennzeichnet, dass** in den Schritten (a) und (b) ein Elutionsmittel verwendet wird, das gewählt ist aus der Gruppe umfassend wässrige Säuren, wässrige Laugen und wässrige Salzlösungen, die gegebenenfalls komplexbildende Liganden enthalten.

8. Vorrichtung zur Gewinnung eines Radionuklids nach einem Verfahren gemäß den Ansprüchen 1 bis 7, umfassend einen Radionuklid-Generator (6), gegebenenfalls eine oder mehrere Pumpen (2, 3, 4, 5), gegebenenfalls ein oder mehrere Mehrwegventile (9, 17) sowie eine Absorptionssäule (14, 15) mit ersten und zweiten Öffnungen (14A, 14B) und ersten und zweiten Leitungen (10, 11) zum Zuführen und Ableiten eines Elutionsmittels, die über eine stellbare Fluidkupplung (12A, 12B) oder ein Kreuzventil (30) mit der Absorptionssäule (14) verbunden sind, wobei die Absorptionssäule (14, 15) über eine der Leitungen (10, 11) mit dem Radionuklid-Generator (6) verbunden ist, **dadurch gekennzeichnet, dass** in einer ersten Stellung der Fluidkupplung (12A, 12B) bzw. des Kreuzventils 30 die erste Leitung (10) mit der ersten Öffnung (14A) und die zweite Leitung (11) mit der zweiten Öffnung (14B) verbunden ist, und in einer zweiten Stellung der Fluidkupplung (12A, 12B) bzw. des Kreuzventils 30 die erste Leitung (10) mit der zweiten Öffnung (14B) und die zweite Leitung (11) mit der ersten Öffnung (14A) verbunden ist.

9. Vorrichtung nach Anspruch 8, **dadurch gekennzeichnet, dass** die Absorptionssäule ein rohrfömiges Behältnis (14) mit zwei U- oder V-förmig angeordneten Schenkeln umfasst.

10. Vorrichtung nach Anspruch 8 oder 9, **dadurch gekennzeichnet, dass** die Absorptionssäule einen Absorber (15) aus einem anorganischen Stoff, insbesondere aus einem Oxid der Metalle Aluminium, Silizium, Zinn, Titan, Zirkon oder aus einem organischen Stoff, insbesondere aus einem anionischen oder kationischen Ionentauscher umfasst.

11. Vorrichtung nach einem oder mehreren der Ansprüche 8 bis 10, **dadurch gekennzeichnet, dass** die Fluidkupplung eine erste und zweite Kanalplatte (12A, 12B) umfasst, jede der Kanalplatten (12A, 12B) zwei Durchführungen aufweist, mindestens eine der Kanalplatten (12A, 12B) drehbar gelagert ist und eine der Kanalplatten (12A, 12B) mit der Absorptionssäule (14, 15) derart fluiddicht gekoppelt ist, dass eine der Durchführungen der Kanalplatte mit der ersten Öffnung (14A) und die andere Durchführung mit der zweiten Öffnung (14B) der Absorptionssäule (14, 15) verbunden ist.

12. Vorrichtung nach einem oder mehreren der Ansprüche 8 bis 11, **dadurch gekennzeichnet, dass** die Leitungen (10, 11) als Schläuche ausgebildet und aus einem elastischen Material, insbesondere aus einem polymeren Werkstoff gefertigt sind.

13. Vorrichtung nach Anspruch 8 , **dadurch gekennzeichnet, dass** der Radionuklid-Generator ein Isotopengemisch aus einem radioaktiven Mutternuklid und radioaktiven Tochternukliden enthält, welches gewählt ist aus der Gruppe umfassend ⁸²Sr/⁸²Rb mit Halbwertszeit T_{1/2}(⁸²Sr) = 25,6 d; ¹⁸⁸W/¹⁸⁸Re mit T_{1/2}(¹⁸⁸W) = 69,4 d; ⁶⁸Ge/⁶⁸Ga mit T_{1/2}(⁶⁸Ge) = 271 d; ⁴⁴Ti/⁴⁴Sc mit T_{1/2}(⁴⁴Ti) ≈ 60 y; ²²⁵Ac/²¹³Bi mit T_{1/2}(²²⁵Ac) = 10,6 d; ⁹⁰Sr/⁹⁰Y mit T_{1/2}(⁹⁰Sr) = 28,5 y; ²²⁹Th/(²²⁵Ra)²²⁵Ac mit T_{1/2}(²²⁹Th) = 7340 y; und ²²⁷Ac/(²²³Th)²²³Ra mit T_{1/2}(²²⁷Ac) = 21,77 y.

## Claims

1. A method for obtaining a radionuclide, comprising the following steps:
(a) providing an absorption column (14, 15) containing the radionuclide;
(b) eluting the absorption column with an eluent, the eluent flowing through the absorption column (14, 15) in a first flow direction (16); and
(c) eluting the absorption column (14, 15) with the eluent in a second flow direction (16'), which is opposite to the first flow direction (16).

2. The method as claimed in claim 1, **characterized in that** steps (b) and (c) are repeated once or more than once.

3. The method as claimed in claim 1 or 2, **characterized in that**, in step (a), a radionuclide generator (6) is eluted with an initial eluent and an initial eluate obtained hereby is passed through the absorption column (14, 15).

4. The method as claimed in one or more of claims 1 to 3, **characterized in that** the absorption column (14, 15) is eluted once or more than once with one or more secondary eluents in step (a) in order to remove contaminants.

5. The method as claimed in one or more of claims 1 to 4, **characterized in that** the absorption column (14, 15) provided in step (a) contains an isotope mixture of a radioactive mother nuclide and radioactive daughter nuclides, selected from the group comprising ⁸²Sr/⁸²Rb with a half-life T_{1/2}(⁸²Sr) = 25.6 d; ¹⁸⁸W/¹⁸⁸Re with T_{1/2}(¹⁸⁸W) = 69.4 d; ⁶⁸Ge/⁶⁸Ga with T_{1/2}(⁶⁸Ge) = 271 d; ⁴⁴Ti/⁴⁴Sc with T_{1/2}(⁴⁴Ti) ≈ 60 y; ²²⁵Ac/²¹³Bi with T_{1/2}(²²⁵Ac) = 10.6 d; ⁹⁰Sr/⁹⁰Y with T_{1/2}(⁹⁰Sr) = 28.5 y; ²²⁹Th/(²²⁵Ra) ²²⁵Ac with T_{1/2}(²²⁹Th) = 7340 y; and ²²⁷Ac/(²²³Th)²²³Ra with T_{1/2}(²²⁷Ac) = 21.77 y.

6. The method as claimed in one or more of claims 1 to 5, **characterized in that** use is made of an absorption column containing an absorber made of an inorganic substance, more particularly an oxide of the metals aluminum, silicon, tin, titanium, zirconium, or an organic substance, more particularly an anionic or cationic ion exchanger.

7. The method as claimed in one or more of claims 1 to 6, **characterized in that** an eluent is used in steps (a) and (b) which is selected from the group comprising aqueous acids, aqueous alkalis and aqueous salt solutions, which optionally contain complex-forming ligands.

8. A device for obtaining a radionuclide according to a method as claimed in claims 1 to 7, comprising a radionuclide generator (6), optionally one or more pumps (2, 3, 4, 5), optionally one or more multiport valves (9, 17) and an absorption column (14, 15) with first and second openings (14A, 14B) and first and second lines (10, 11), connected to the absorption column (14) via an adjustable fluid coupling (12A, 12B) or a cross valve (30), for supplying and discharging an eluent, the absorption column (14, 15) being connected to the radionuclide generator (6) via one of the lines (10, 11), **characterized in that**, in a first position of the fluid coupling (12A, 12B) or the cross valve 30, the first line (10) is connected to the first opening (14A) and the second line (11) is connected to the second opening (14B) and, in a second position of the fluid coupling (12A, 12B) or the cross valve 30, the first line (10) is connected to the second opening (14B) and the second line (11) is connected to the first opening (14A).

9. The device as claimed in claim 8, **characterized in that** the absorption column comprises a tubular container (14) with two limbs arranged in a U- or V-shaped manner.

10. The device as claimed in claim 8 or 9, **characterized in that** the absorption column comprises an absorber (15) made of an inorganic substance, more particularly an oxide of the metals aluminum, silicon, tin, titanium, zirconium, or an organic substance, more particularly an anionic or cationic ion exchanger.

11. The device as claimed in one or more of claims 8 to 10, **characterized in that** the fluid coupling comprises a first and second channel plate (12A, 12B), each of the channel plates (12A, 12B) has two ducts, at least one of the channel plates (12A, 12B) is rotatably mounted and one of the channel plates (12A, 12B) is coupled to the absorption column (14, 15) in a fluid-tight manner such that one of the ducts of the channel plate is connected to the first opening (14A) and the other duct is connected to the second opening (14B) of the absorption column (14, 15).

12. The device as claimed in one or more of claims 8 to 11, **characterized in that** the lines (10, 11) are embodied as tubes and manufactured from an elastic material, more particularly from a polymer material.

13. The device as claimed in claim 8, **characterized in that** the radionuclide generator contains an isotope mixture of a radioactive mother nuclide and radioactive daughter nuclides, selected from the group comprising ⁸²Sr/⁸²Rb with a half-life T_{1/2}(⁸²Sr) = 25.6 d; ¹⁸⁸W/¹⁸⁸Re with T_{1/2}(¹⁸⁸W) = 69.4 d; ⁶⁸Ge/⁶⁸Ga with T_{1/2}(⁶⁸Ge) = 271 d; ⁴⁴Ti/⁴⁴Sc with T_{1/2}(⁴⁴Ti) ≈ 60 y; ²²⁵Ac/²¹³Bi with T_{1/2}(²⁵Ac) = 10.6 d; ⁹⁰Sr/⁹⁰Y with T_{1/2}(⁹⁰Sr) = 28.5 y; ²²⁹Th/(²²⁵Ra)²²⁵Ac with T_{1/2}(²²⁹Th) = 7340 y; and ²²⁷Ac/(²²³Th) ²²³Ra with T_{1/2} (²²⁷Ac) = 21.77 y.

## Revendications

1. Procédé d'obtention d'un radionucléide, comprenant les étapes consistant à :
(a) préparer une colonne d'absorption (14, 15) contenant le radionucléide ;
(b) éluer la colonne d'absorption avec un éluant, dans lequel l'éluant traverse la colonne d'absorption (14, 15) dans un premier sens d'écoulement (16) ; et
(c) éluer la colonne d'absorption (14, 15) avec l'éluant dans un second sens d'écoulement (16') opposé au premier sens d'écoulement (16).

2. Procédé selon la revendication 1, **caractérisé en ce que** les étapes (b) et (c) sont répétées une ou plusieurs fois.

3. Procédé selon la revendication 1 ou 2, **caractérisé en ce que**, à l'étape (a), un générateur de radionucléide (6) est élué avec un éluant initial et un éluat initial ainsi obtenu est acheminé à travers la colonne d'absorption (14, 15).

4. Procédé selon une ou plusieurs des revendications 1 à 3, **caractérisé en ce que** la colonne d'absorption (14, 15) est éluée à l'étape (a) une ou plusieurs fois avec un ou plusieurs éluants secondaires pour éliminer les impuretés.

5. Procédé selon une ou plusieurs des revendications 1 à 4, **caractérisé en ce que** la colonne d'absorption (14, 15) préparée à l'étape (a) contient un mélange d'isotopes formé d'un nucléide père radioactif et de nucléides fils radioactifs, qui est choisi dans le groupe comprenant les suivants : ⁸²Sr/⁸²Rb d'une demi-vie de T_{1/2}(⁸²Sr) = 25,6 jours ; ¹⁸⁸W/¹⁸⁸Re de T_{1/2}(¹⁸⁸W) = 69,4 jours ; ⁶⁸Ge/⁶⁸Ga de T_{1/2}(⁶⁸Ge) = 271 jours ; ⁴⁴Ti/⁴⁴Sc de T_{1/2}(⁴⁴Ti) □ 60 années ; ²²⁵Ac/²¹³Bi de T_{1/2}(²²⁵Ac) = 10,6 jours ; ⁹⁰Sr/⁹⁰Y de T_{1/2}(⁹⁰Sr) = 28,5 années ; ²²⁹Th(²²⁵Ra) ²²⁵Ac de T_{1/2}(²²⁹Th) = 7340 années ; et ²²⁷Ac/(²²³Th) ²²³Ra de T_{1/2}(²²⁷Ac) = 21,77 années.

6. Procédé selon une ou plusieurs des revendications 1 à 5, **caractérisé en ce qu'**on utilise une colonne d'absorption qui contient un absorbeur formé d'un matériau inorganique, en particulier d'un oxyde de métaux tels que l'aluminium, le silicium, l'étain, le titane et le zirconium, ou d'un matériau organique, en particulier d'un échangeur ionique anionique ou cationique.

7. Procédé selon une ou plusieurs des revendications 1 à 6, **caractérisé en ce que**, aux étapes (a) et (b), on utilise un éluant qui est choisi dans le groupe comprenant des acides aqueux, des lessives aqueuses et des solutions de sels aqueuses qui contiennent éventuellement des ligands formateurs de complexes.

8. Dispositif permettant d'obtenir un radionucléide par un procédé selon les revendications 1 à 7, comprenant un générateur de radionucléide (6), éventuellement une ou plusieurs pompes (2, 3, 4, 5), éventuellement une ou plusieurs soupapes à voies multiples (9, 17) ainsi qu'une colonne d'absorption (14, 15) avec une première et une seconde ouverture (14A, 14B) et une première et une seconde conduite (10, 11) pour amener et évacuer un éluant, qui sont reliées à la colonne d'absorption (14) via un couplage fluidique réglable (12A, 12B) ou une soupape croisée (30), dans lequel la colonne d'absorption (14, 15) est reliée au générateur de radionucléide (6) via l'une des conduites (10, 11), **caractérisé en ce que**, dans une première position du couplage fluidique (12A, 12B) ou de la soupape croisée (30), la première conduite (10) est reliée à la première ouverture (14A) et la seconde conduite (11) à la seconde ouverture (14B) et, dans la seconde position du couplage fluidique (12A, 12B) ou de la soupape croisée (30), la première conduite (10) est reliée à la seconde ouverture (14B) et la seconde conduite (11) à la première ouverture (14A).

9. Dispositif selon la revendication 8, **caractérisé en ce que** la colonne d'absorption comprend une enveloppe tubulaire (14) avec deux ailes aménagées en forme de U ou de V.

10. Dispositif selon la revendication 8 ou 9, **caractérisé en ce que** la colonne d'absorption comprend un absorbeur (15) formé d'un matériau inorganique, en particulier d'un oxyde de métaux tels que l'aluminium, le silicium, l'étain, le titane et le zirconium, ou d'un matériau organique, en particulier d'un échangeur ionique anionique ou cationique.

11. Dispositif selon une ou plusieurs des revendications 8 à 10, **caractérisé en ce que** le couplage fluidique comprend une première et une seconde plaque à canaux (12A, 12B), chacune des plaques à canaux (12A, 12B) présente deux passages, au moins l'une des plaques à canaux (12A, 12B) est montée à rotation et l'une des plaques à canaux (12A, 12B) est couplée à la colonne d'absorption (14, 15) de manière étanche aux fluides de telle sorte que l'un des passages de la plaque à canaux soit reliée à la première ouverture (14A) et l'autre passage à la seconde ouverture (14B) de la colonne d'absorption (14, 15).

12. Dispositif selon une ou plusieurs des revendications 8 à 11, **caractérisé en ce que** les conduites (10, 11) sont conformées en tuyaux et sont formées d'un matériau élastique, en particulier d'un matériau polymère.

13. Dispositif selon la revendication 8, **caractérisé en ce que** le générateur de radionucléide contient un mélange d'isotopes formé d'un nucléide père radioactif et de nucléides fils radioactifs, qui est choisi dans le groupe comprenant les suivants : ⁸²Sr/⁸²Rb d'une demi-vie de T_{1/2}(⁸²Sr) = 25,6 jours ; ¹⁸⁸W/¹⁸⁸Re de T_{1/2}(¹⁸⁸W) = 69,4 jours ; ⁶⁸Ge/⁶⁸Ga de T_{1/2}(⁶⁸Ge) = 271 jours ; ⁴⁴Ti/⁴⁴Sc de T_{1/2}(⁴⁴Ti) □ 60 années ; ²²⁵Ac/²¹³Bi de T_{1/2}(²²⁵Ac) = 10,6 jours ; ⁹⁰Sr/⁹⁰Y de T_{1/2}(⁹⁰Sr) = 28,5 années ; ²²⁹Th(²²⁵Ra)²²⁵Ac de T_{1/2}(²²⁹Th) = 7340 années ; et ²²⁷Ac/(²²³Th)²²³Ra de T_{1/2}(²²⁷Ac) = 21,77 années.
